**Europäisches Patentamt**

**European Patent Office**

**Office européen des brevets**

(11) **EP 0 769 732 B1**

(12) **EUROPEAN PATENT SPECIFICATION**

(45) Date of publication and mention
of the grant of the patent:
**05.12.2001 Bulletin 2001/49**

(51) Int Cl.⁷: **H04N 5/30**, G03G 15/02,
G03G 15/32, G06K 15/14

(21) Application number: **96119389.3**

(22) Date of filing: **08.05.1992**

(54) **Apparatus for information transfer**

Gerät zur Informationsübertragung

Appareil pour le transfert d'information

(84) Designated Contracting States:
**AT BE CH DE DK ES FR GB GR IT LI LU MC NL SE**

(30) Priority: **08.05.1991 US 697166**
**27.09.1991 US 766691**
**17.01.1992 IL 10069492**
**14.02.1992 IL 10096192**

(43) Date of publication of application:
**23.04.1997 Bulletin 1997/17**

(62) Document number(s) of the earlier application(s) in
accordance with Art. 76 EPC:
**92912165.5 / 0 538 454**

(73) Proprietor: **CUBITAL AMERICA, INC.**
**Troy, MI 48083 (US)**

(72) Inventors:
• **Zur, Albert**
  **Givat Savion (IL)**
• **Weksler, Meir**
  **805 Mazkeret Batya (IL)**
• **Pomerantz, Itzchak**
  **Kfar Sava (IL)**

(74) Representative: **Molyneaux, Martyn William**
**Langner Parry**
**52-54 High Holborn**
**London WC1V 6RR (GB)**

(56) References cited:
**EP-A- 0 327 236**      **EP-A- 0 368 316**
**US-A- 4 155 093**      **US-A- 4 409 604**
**US-A- 5 046 828**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to apparatus and methods for non-contact printing, reading and imaging.

There exist in the patent literature disclosures of a great number of techniques for non-contact printing and imaging. The most widely used of these techniques is electrophotography wherein an electrostatic image is optically formed on a photoconductor, which is then developed with a toner. The toner image is transferred to a substrate and fused thereon.

An additional technique in general use is ionography, wherein an electrostatic image is formed on a dielectric substrate by firing charges directly on the substrate using an imagewise ion source.

A technique for the transfer of electrostatic images from a photoconductor dielectric onto a dielectric substrate has also been proposed in Electrophotography by R.M. Schaffert, 2nd Edition, Focal Press, London, 1975 at pages 166 - 176 and in U.S. Patent 3,055,006. This technique, known as TESI (Transfer of Electrostatic Images) employs an imagewise optical signal to create a charge image on a photoconductor. The charge image is subsequently replicated onto a dielectric substrate by applying single polarity charges to a surface of the dielectric substrate opposite from that surface which faces the photoconductor.

It is also known to read electrostatically a charge pattern by opposing electrodes, see EP-A-0 327 236, Fig 2, or EP-A-0 368 316, Fig 3.

## SUMMARY OF THE INVENTION

According to this invention there is provided an apparatus as claimed in claim 1 and a method as claimed in claim 10 herein.

Preferred features of the invention are defined in the dependent claims.

## BRIEF DESCRIPTION OF THE DRAWINGS

The present invention will be understood and appreciated more fully from the following detailed description, taken in conjunction with the drawings in which:

Figs. 1A and 1B are illustrations of apparatus for reading an electrostatic charge pattern on a surface of a dielectric substrate in accordance with this invention;
Figs. 2A, 2B and 2C are diagrams illustrating the behavior of voltages at different points on the electronic circuit of Figs. 1A and 1B;
Figs. 3A, 3B, 3C and 3D are diagrams illustrating the operation of the apparatus of Figs. 1A and 1B at a single pixel location on the surface of the dielectric substrate;
Fig. 4A is a schematic illustration of an arbitrary "original" charge pattern on a surface of a dielectric substrate;
Fig. 4B is a diagram illustrating a voltage signal which results from reading the charge pattern;
Fig. 5 is a pictorial illustration of apparatus for reading a charge pattern on a dielectric substrate;
Figs. 6A, 6B and 6C are diagrams of various operational parameters of the apparatus of Fig. 5;
Figs. 7A and 7B are respective generalized and side view illustrations of apparatus for reading a charge pattern on the surface of a dielectric substrate in accordance with another embodiment of the present invention ;
Figs. 8A and 8B are respective generalized and detail illustrations of apparatus for reading a charge pattern on a dielectric substrate in accordance with yet another embodiment of the present invention;
Figs. 9A - 9C are illustrations of the operation of an imaging system constructed and operative in accordance with a preferred embodiment of the present invention;
Figs. 10A and 10B are pictorial illustrations of an alternative embodiment of an apparatus for providing an alternating polarity charge beam having at least one defined edge in accordance with the present invention.

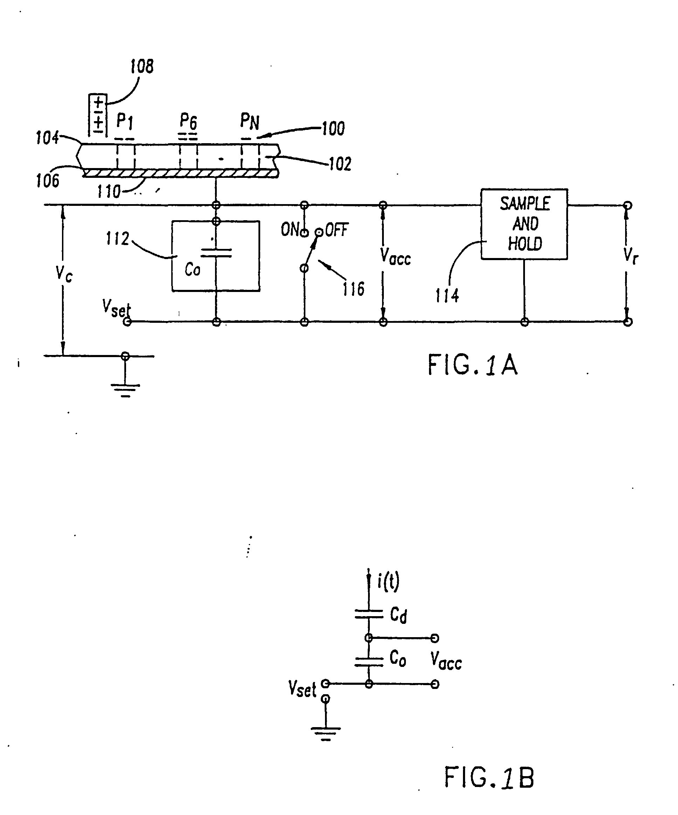

Reference is now made to Figs. 1A and 1B which illustrate apparatus for reading an electrostatic charge pattern 100 on a surface of a dielectric substrate 102. The dielectric substrate can be any suitable dielectric substrate and may include a photoconductor or any substrate which exhibits dielectric qualities at a given time.

The charge pattern 100 to be read is created by any suitable technique on a surface 104 of a dielectric substrate having first and second opposite surfaces 104 and 106, such as any dielectric substrate described hereinabove. The charge pattern 100 is distributed over discrete regions (P1..PN) of the substrate.

In accordance with an embodiment of the invention, each region of the pattern is read individually using the technique described below. Each such region typically defines a pixel. Normally a two dimensional pixel distribution is envisioned. For convenience of illustration, only one dimension is illustrated in many of the drawings herein.

As illustrated in Fig. 1A, an alternating polarity charge source (APCS) 108, which may be as mentioned hereinabove, is employed to supply a flow of charges to the region P1 of surface 104. As the flow of charges is supplied to the region P1, a current is induced in a conductive backing 110 lying adjacent surface 106 and a charge, corresponding to the charge originally at region P1, is accumulated, preferably by capacitive means 112. The capacitive means is electrically coupled to the conductive backing 110 and comprises a capacitor having a capacitance of $C_o$.

Electronic means for sensing and measuring the accumulated charge, typically including a sample and hold device 114, are coupled to the capacitive means. Preferably the electronic means further comprises an electronic switch 116 which, when open, causes charge to accumulate in the capacitive means 112. When the electronic switch 116 is closed, the capacitive means 112 is discharged and reset. An output of the electronic means, an analog voltage $V_r$, is indicative of the charge at region P1 prior to the supply of charges thereto by APCS 108. The voltage $V_r$ may be serially stored in an external digital memory device (not shown) by using an analog to digital converter.

The steps of supplying a flow of charges and then sensing the generated voltage signal may be repeated across the entire substrate resulting in serial data outputs from pixel regions P1 to Pn where n is the number of pixels on the substrate. The serial data of the different regions represents the entire pattern.

Fig 1B illustrates an equivalent circuit corresponding to the electrical relationship of the APCS 108, the substrate 102, the conductive backing 110 and the capacitive means 112. The electronic means comprising switch 116 and sample and hold circuit 114 may be collectively referred to as "read electronics".

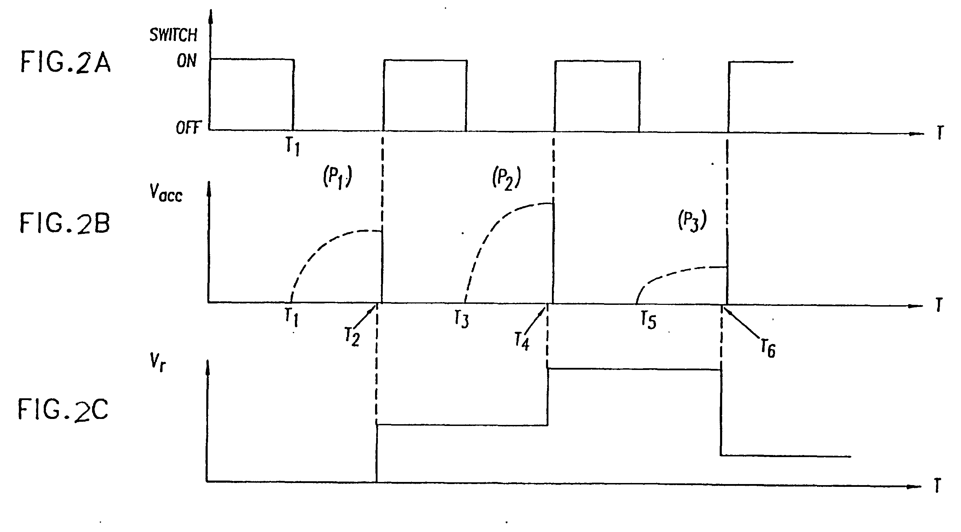

Reference is now made to Figs. 2A - 2C which illustrate the behavior of voltages at different points on the electronic circuit described in Figs. 1A and 1B.

Fig. 2A illustrates the status of the electronic switch 116. When closed, switch 116 causes the capacitor 112 to discharge and reset. When switch 116 is open, the capacitor 112 may accumulate charge.

Fig. 2B illustrates the effective voltage across the capacitor 112 as a function of time. At time T1, the APCS 108 begins to sweep over region P1 and supplies a net flow of charges to that region, inducing a current flow from the conductive backing 110 to capacitor 112, producing accumulation of charge thereat.

This current flow continues until the net effect of the charge flow from the APCS 108 on pixel P1 is zero. At time T2, the voltage across the capacitor 112, $V_{acc}$, is sampled and processed by the sampling and hold circuit 114. Figure 2C graphically illustrates output voltage $V_r$ as a function of time.

The equivalent circuit of Fig. 1B can be further employed to describe the behavior of the apparatus of Fig. 1A. The dielectric substrate 102 is represented by capacitor $C_d$ in Fig. 1B. The surface charge at an arbitrary pixel P1, associated with the charge pattern previously present on the surface 104 of the substrate 102 is denoted, for the purposes of the discussion which follows, as $Q_d$ and the voltage $V_d$ across the dielectric, associated with this charge is:

$$V_d = Q_d/C_d \qquad (1)$$

The APCS 108 provides a flow of charges to the dielectric surface 102 causing charging of the accumulator 112. This may be envisioned as the result of an equivalent current flow i across both the dielectric $C_d$ and the capacitor $C_o$, which represents accumulator 112.

Consequently, the potential across the dielectric changes from $V_d$ to $V_d^*$ where

$$V_d^* = V_d + 1/C_d \qquad \int idt \qquad (2)$$

where T1 and T2 are the T1 and T2 defined in association with Fig. 2B and i is the current flowing.

Simultaneously a voltage $V_{acc}$ develops across capacitor $C_o$ where:

$$V_{acc} = 1/C_o \qquad \int idt \qquad (3)$$

According to the above description of the operation of the APCS, the effective flow of net charge to the pixel P1 at the dielectric surface continues until the potential resulting from both the residual charge on surface 104 and the voltage of the conductive backing 110 at pixel P1 is effectively zero. Therefore at T2 the potential $V_d^*$ is given by

$$V_d^* = -(V_{set}+V_{acc}) \qquad (4)$$

The value of $V_{acc}$ is obtained by combining equations 1 - 4 where

$$V_{acc} = -(V_{set} + V_d) \, C_d/(C_d+C_o) \qquad (5)$$

For a particular case where $V_{set}$ is ground

$$*V_{acc} = -aV_d \qquad (6)$$

where a is defined as:

$$a = C_d/(C_d+C_o) \qquad (7)$$

The value for $C_o$ may be determined by examining the ratio between the voltage $V_d$, prior to APCS charge supply, and $V_{acc}$. Since the potentials of electrostatic images are typically on the order of hundreds of volts and $V_{acc}$ is desirably no more than a few volts, a typical value for $C_o$ is 100 times greater than the pixel capacitance $C_d$.

It is further appreciated that since $V_{acc}$ is considerably smaller than $V_{set}$, the ultimate potential across the dielectric surface is practically equal to $V_{set}$, irre-

spective of the previous charge $Q_d$.

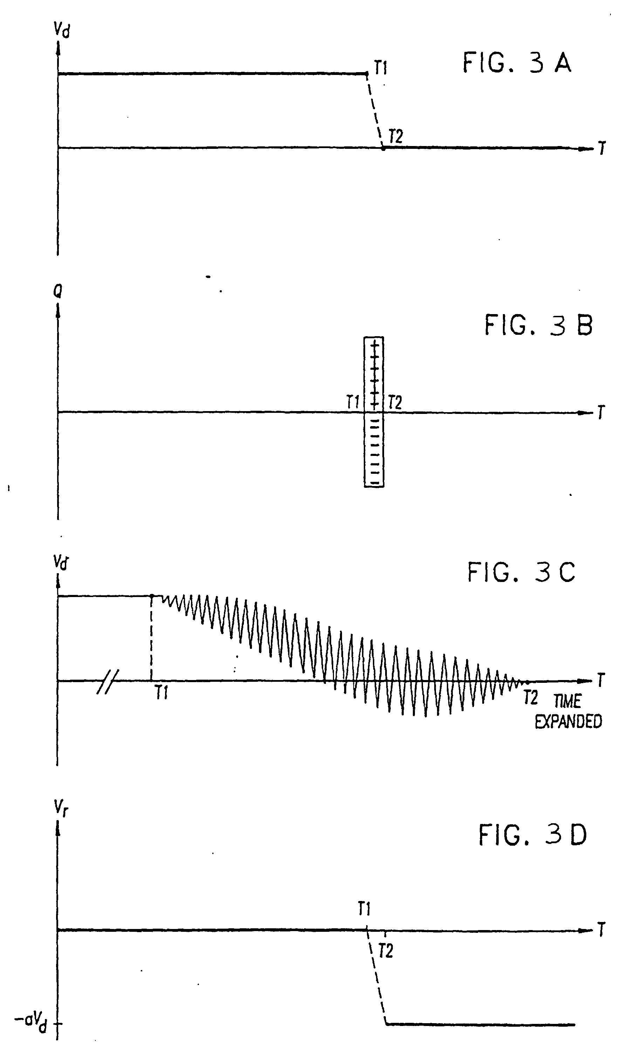

Reference is now made to Figs. 3A - 3D. which illustrate the operation of the apparatus of Figs. 1A and 1B at a single pixel location on the surface of the dielectric substrate 102. Fig. 3A illustrates the voltage $V_d$, at that same pixel location as it varies with time for a case where $V_{set}$ is ground. Therefore following the sweep of the APCS of the pixel location, the voltage remaining threat is effectively zero.

Fig. 3B illustrates, on the same time scale as that of Fig. 3A, the application of a flow of charges by the APCS to the same pixel location whereby, following application of such flow of charges, the voltage at that pixel location is zero.

In accordance with the illustrated preferred embodiment of the invention, the flow of charges comprises an alternating polarity charge flow to the surface of the dielectric substrate. This charge flow occurs over a time span which is short relative to the time necessary to sweep the pixel dimension along a given direction of motion of the APCS. Therefore, during this time span the location of the APCS relative to the pixel location does not change considerably, and the charge flow may be represented by a stack of positive and negative charges as shown in Fig. 3B. The beginning and end of the duration of the alternating polarity charge flow are indicated in Fig. 3B respectively as T1 and T2.

Fig. 3C is an expanded time scale illustration corresponding to Fig. 3A and illustrates with greater particularity one possible application of typical alternating charge flow to the surface 104 of the dielectric substrate 102, which produces a change in the voltage at the pixel location on surface 104 from the voltage at time T1 to effectively a zero voltage at time T2. The flow of charges illustrated induces a corresponding current in the conductive backing 110. The current induced in the conductive backing 110 causes a charge to be accumulated by the capacitor 112, which is electronically coupled to the conductive backing 110.

Fig. 3D illustrates the voltage $V_r$, output by the read electronics, which sense and measure the charge accumulated in capacitor 112. The voltage output by the read electronics is in direct negative proportion to the original charge at the pixel location at which the flow of charges was applied.

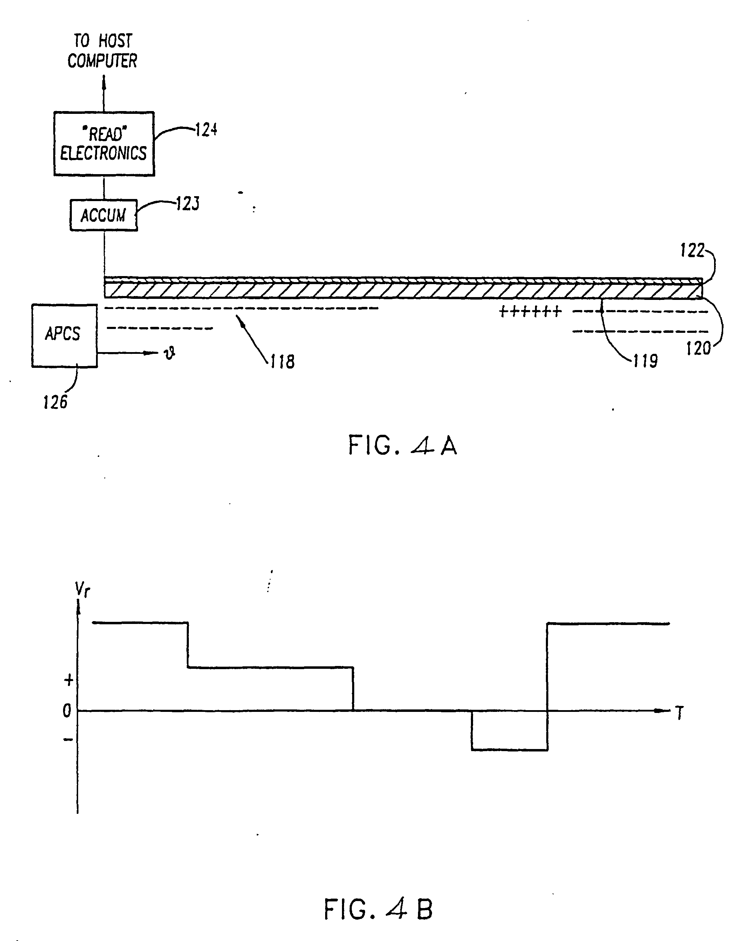

Referring now to Fig. 4A, there is shown schematically an arbitrary "original" charge pattern 118 on a surface 119 of a dielectric substrate 120, which substrate 120 is preferably backed with a conductive backing 122. Accumulative means 123 and read electronics 124, as described in Figs. 1A and 1B, are electronically coupled to the conductive backing 122. Also illustrated is an alternating polarity charge source (APCS) 126, of the type illustrated in Figs. 1A and 1B, which is typically capable of achieving a spatial edge accuracy consistent with a desired resolution. The APCS 126 is preferably moved at a constant velocity v along the surface of the dielectric substrate. Fig. 4B illustrates the voltage signal which results from reading the charge pattern 118 in accordance with the techniques described hereinabove.

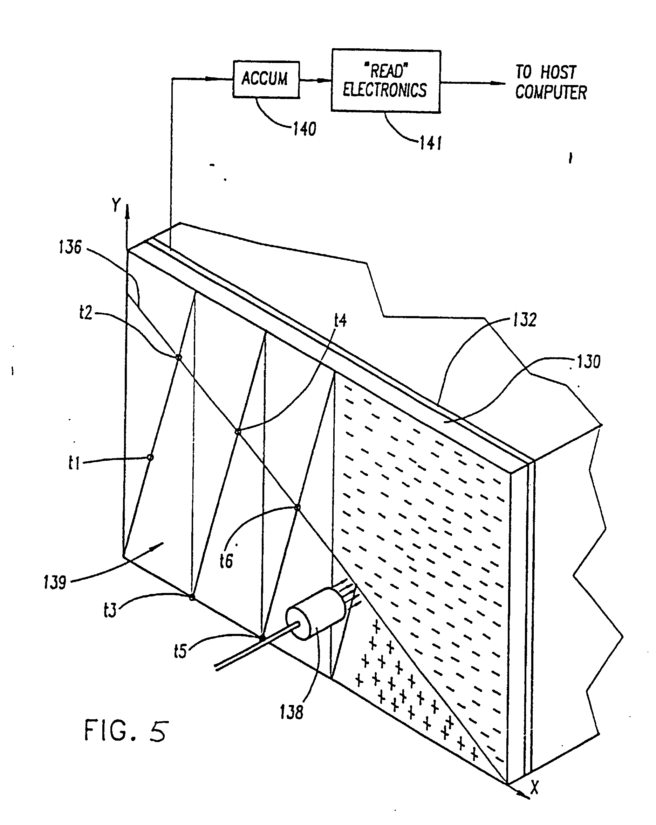

Figure 5 is a pictorial illustration of apparatus for reading a charge pattern on a dielectric substrate according to the steps described hereinabove in conjunction with Figs. 1A and 1B.

A charge source 138, such as an APCS which produces charges which vary in polarity as a function of time, sweeps a surface 139 of a dielectric substrate 130 along an arbitrary pattern such as the up/down and sideways pattern of Fig. 5. Associated with the dielectric substrate 130 is a conductive backing 132.

In the illustrated embodiment, there is initially located on surface 139 a charge pattern which is uniformly negative above a diagonal line 136 and is uniformly positive below the diagonal line. It is appreciated that this charge pattern may be generated by any suitable technique.

As the charge source 138 sweeps and zeros a pixel location on the substrate surface 139, accumulative means 140 and read electronics 141, in accordance with the technique described hereinabove, produce an output $V_r$ which corresponds to the voltage previously present at that pixel location.

The operation of the apparatus of Fig. 5 may be appreciated and better understood by means of reference to Figs. 6A - 6C. Figs 6A - 6C, all of which represent events taking place along the same time scale, illustrate operational parameters of the apparatus of Fig. 5.

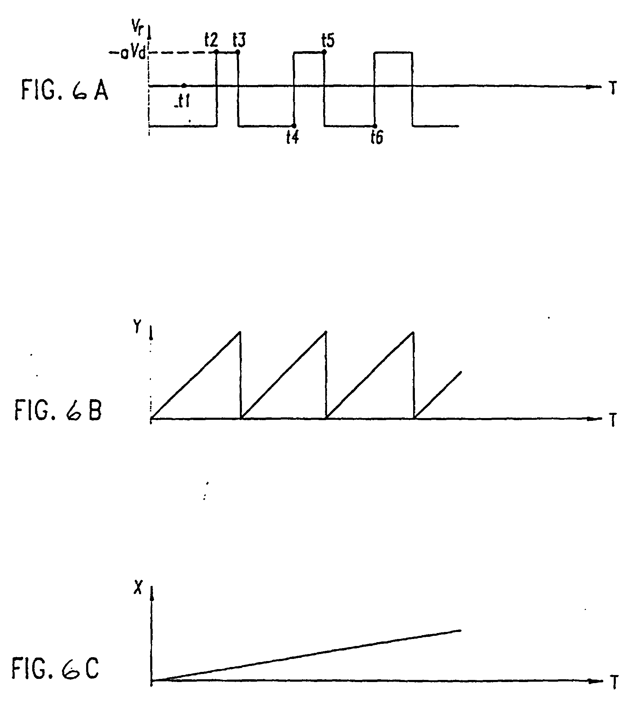

Fig. 6A illustrates the voltage $V_r$ output by the read electronics 141 as a function of time. The time indications t1 - t6 illustrate the position of the APCS 138 at various times. Figs. 6B and 6C illustrate the Y and X positions of the APCS 138 as a function of time.

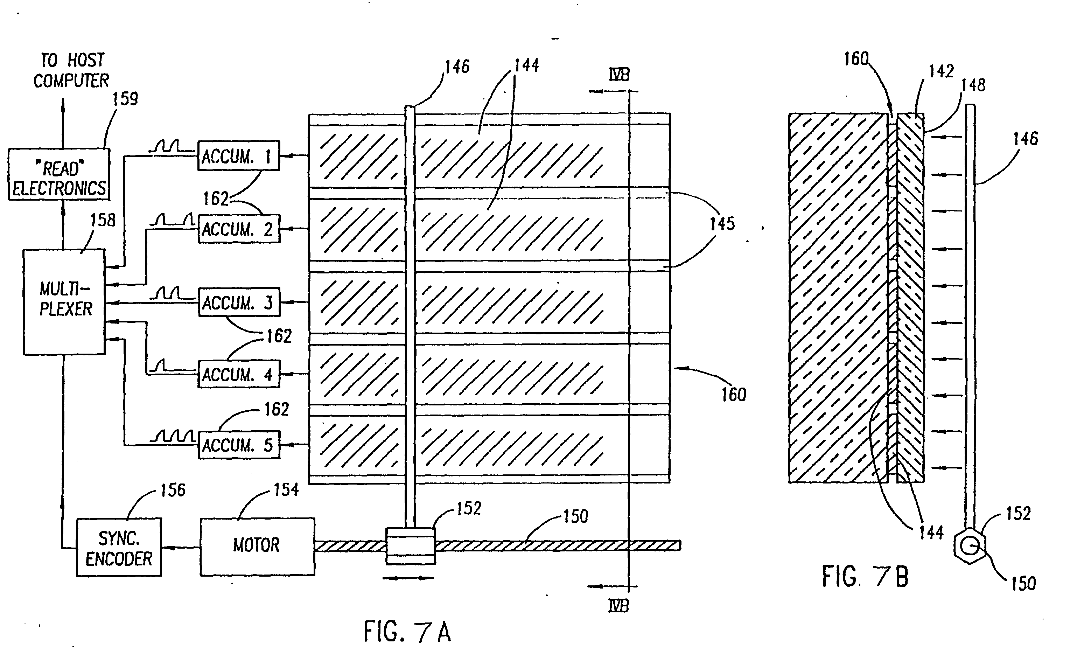

Reference is now made to Figs. 7A and 7B which illustrate-apparatus for reading a charge pattern on the surface of a dielectric substrate in accordance with another embodiment of the present invention. In this embodiment, an elongate alternating polarity charge source (EAPCS) 146 scans in one dimension, perpendicular to its longitudinal axis, along a surface 148 of a dielectric substrate 142, by means of a linear drive mechanism including a worm screw 150 cooperating with a screw rider 152, fixed to source 146. An electric motor 154 drives the worm screw 150. A commercially available synchronized encoder 156 provides position information about the EAPCS 146 to a host computer (NOT SHOWN) at any given time.

In this embodiment, a multisectional conductive backing layer 160, typically comprising a plurality of elongate strips 144, is associated with a surface of the dielectric substrate 142. Each strip 144 is associated with individual means 162 for accumulating the charge which flows from that strip. Typically the accumulating means 162 includes a capacitor.

A multiplexer 158 is associated with the individual accumulators 162 and functions to select the accumulator 162 whose output is sampled by read electronics 159 at any given time. The read electronics 159 measures the voltage stored in the selected accumulator 162 in accordance with the technique described hereinabove in conjunction with Figs. 1A and 1B. Information from the read electronics 159 may be serially fed to a host computer (NOT SHOWN).

For read/write applications both accumulators 162 and drivers not shown can be electronically coupled to the same conductive strips. The read electronics 159 may be activated in a time shared manner with the write electronics.

It is appreciated that a desired twodimensional spatial resolution may be achieved by adjusting appropriate parameters. In a first dimension, the parameters to be adjusted include the width of the elongate strips 144, the width of the gap 145 between adjacent strips 144 and the thickness of the dielectric layer 142. In a second dimension, the parameters include the edge definition of the EAPCS 146 and time intervals between two subsequent sampling cycles of the read electronics 159 from the same accumulator.

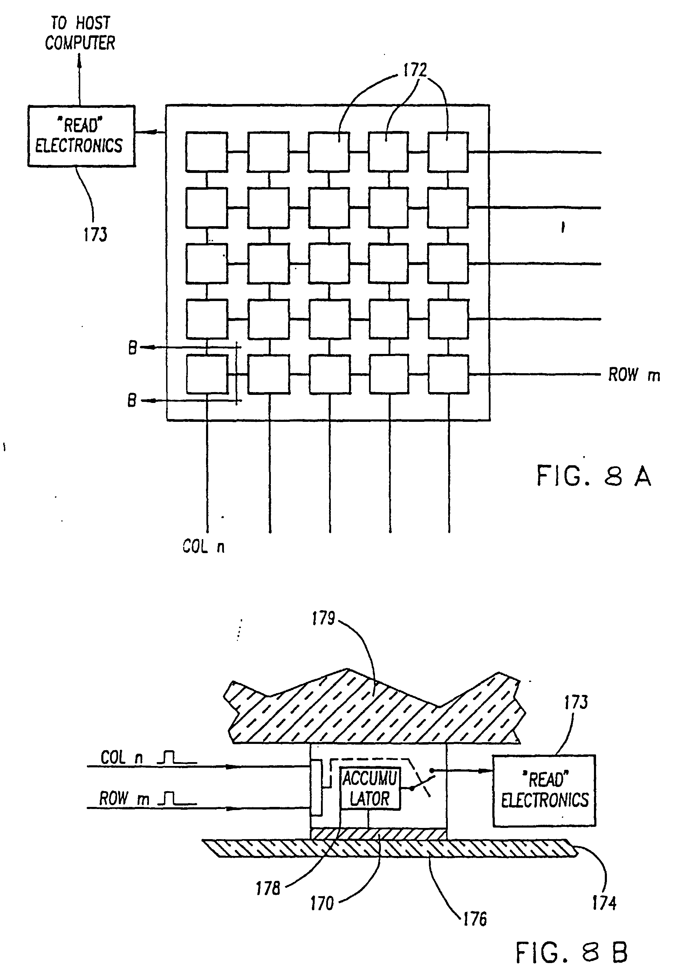

Reference is now made to Figs. 8A and 8B which are respectively generalized and detail illustrations of apparatus for reading a charge pattern on a dielectric substrate in accordance with yet another embodiment of the present invention. Here, strips 144 in the embodiment of Figs. 7A and 7B are replaced by a plurality of pixel sized conductive pads 170 which define a two-dimensionally addressable array 172 disposed adjacent a surface 174 of a dielectric substrate 176. Preferably, an accumulator 178 is associated with each pad 170 in the array 172. In this case, a scanning alternating polarity charge source having precisely defined edge resolution need not be provided and may be replaced by static apparatus for supplying a uniform flow of alternating polarity charges over the entire array 172. Read electronics 173 measures the voltage stored in a selected accumulator 178 in accordance with the technique, described hereinabove in conjunction with Figs. 1A and 1B. Information from the read electronics 173 may be serially fed to a host computer (NOT SHOWN). Accumulators are selected for reading by common matrix addressing techniques.

Fig. 8B illustrates a schematic arrangement for addressing a given pad 170, corresponding to a given area element or pixel on the dielectric surface 176. Mechanical support for the array of pads 172 is provided by a plate 179 which is typically glass.

For read/write applications both accumulators 178 and drivers associated with data flip-flops (not shown) can be electronically coupled to the same conductive pads. The read electronics 173 may be activated in a time shared manner with the write electronics.

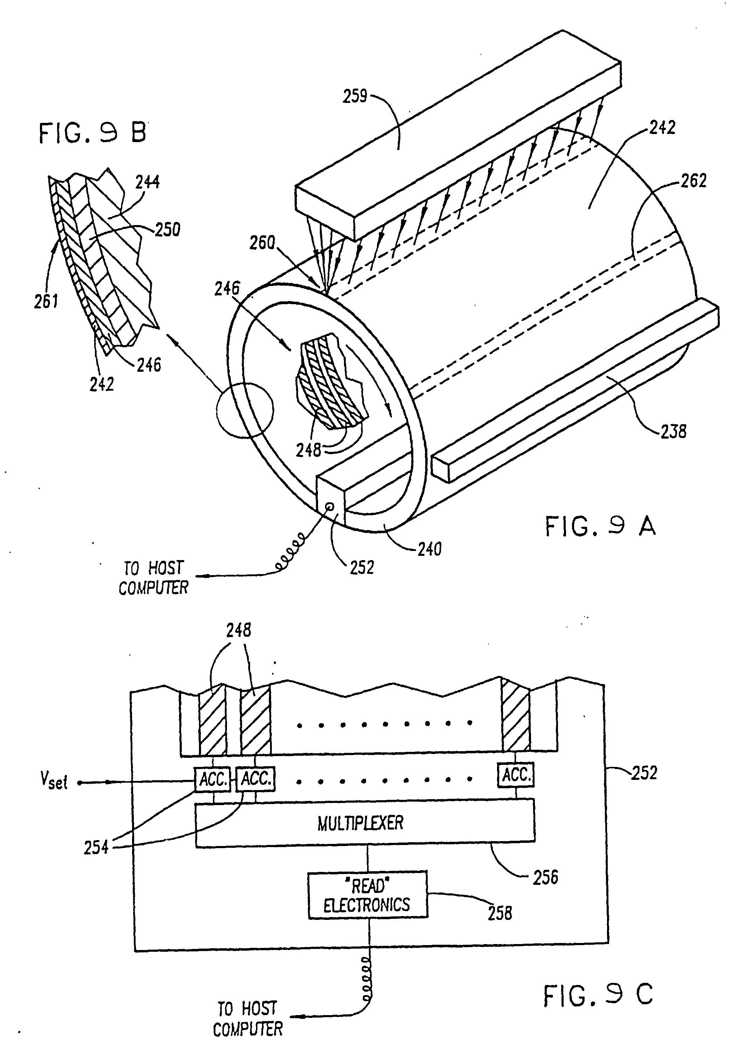

Reference is now made to Figs. 9A - 9C which illustrate the operation and structure of an imaging system constructed and operated in accordance with a preferred embodiment of the present invention. The imaging system of Figs. 9A - 9C may constitute any suitable imaging system such as a camera or scanner.

The illustrated embodiment preferably comprises an EAPCS 238 of the type above described in conjunction with Fig. 7A and further preferably comprises a multi-layered drum 240 having an external photoconductive layer 242, which operates as a dielectric, and an innermost supporting substrate 244. Disposed intermediate the photoconductive layer 242 and the support substrate 244 is a layer 246 incorporating a plurality of conductive bands 248.

Preferably the supporting substrate 244 is a dielectric substrate. In an alternative embodiment where the supporting substrate 244 is a metal, a dielectric layer 250 is required between layer 246 and substrate 244 to electrically insulate the conductive bands 248 from metal substrate 244.

The conductive bands 248 are preferably continuously biased to a voltage +V which corresponds to voltage $V_{set}$ of Figs. 1A - 1B. Preferably associated with conductive bands 248 is an electronic reader circuit 252 schematically represented in Fig. 9C. The reader circuit 252 preferably comprises a plurality of accumulators 254 which correspond to accumulators 162 of Fig. 7A, a multiplexer 256 which corresponds to multiplexer 158 of Fig. 14A and read electronics 258 which correspond to read electronics 159 of Fig. 7A.

A standard optical imaging system 259 is employed to project an image on a region 260 of the photoconductor 242, which has preferably been precharged. As a result of the image projection an electrostatic pattern corresponding to the image is created on the corresponding portion 260 of an outer surface 261 of photoconductor 242.

In the present invention, the electrostatic pattern is read by applying a flow of charges to the pattern bearing region of surface 261 of the dielectric photoconductor 242, using EAPCS 238, thereby inducing a current flow representing the pattern in accordance with the read techniques above described in conjunction with Figs. 7A and 7B. The current flow is sensed by electronic read circuit 252.

Following reading of the pattern, the surface 261 of the photoconductive layer 242 is effectively erased and simultaneously uniformly charged, thus providing precharging of the photoconductor prior to imaging by imaging system 259.

It is appreciated that electrostatic image generation on a portion of the surface 261 of the photoconductor 242 and reading of an electrostatic pattern from a different portion of the surface 261 of the photoconductor 242 in accordance with the present invention can occur simultaneously.

It is noted that the apparatus of Figs. 9A-9C is illustrated schematically and that the invention may be embodied in any suitable type of configuration, not limited to the use of drums, conductive bands and EAPCSs.

In accordance with an alternate embodiment of the apparatus of Figs. 9A - 9C, external photoconductive layer 242 is replaced by an external dielectric layer. Furthermore, read electronics circuit *252* is replaced by write electronics as described hereinabove. It is appreciated that this alternate embodiment may comprises a cylindrical write apparatus and that the need for image source 259 is obviated.

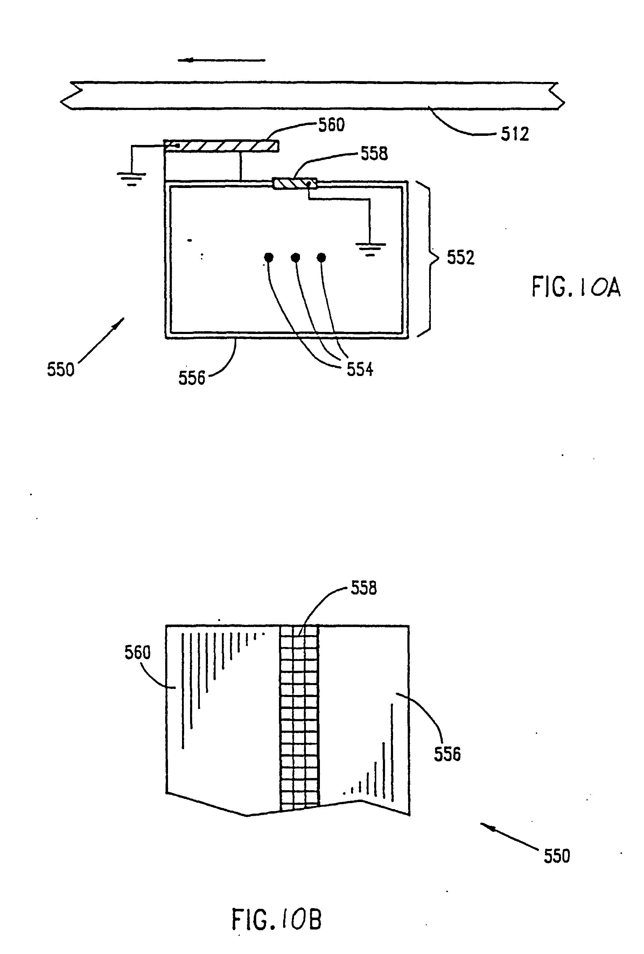

Reference is now made to Figs 10A and 10B which are pictorial illustrations of an alternative embodiment of an apparatus for providing an alternating polarity charge beam having at least one defined edge.

Apparatus 550 comprises alternating charge pool generating apparatus 552, a casing 556 and an elongate electrostatic shield 560. Apparatus 552 preferably comprises one or more corona wires 554 some or all of which may be dielectrically coated. Alternately, corona wires 554 may not be dielectrically coated. Each corona wire 554 is functional to receive a high AC voltage. All of the wires 554 may be biased by the same AC source (not shown). Alternately, corona wires 554 may be biased by AC sources having different amplitudes. It is appreciated that each corona wire 554 may receive a different AC voltage.

Corona wires 554 are confined by isolating casing 556. Typically casing 556 comprises a dielectric material. Casing 556 typically contains an elongate grounded section 558 which is partially open and wherein an ion pool is created.

The open area of grounded section 558 may comprise a gridlike area. Alternately, the open area may comprise at least one elongate slot.

According to an alternate embodiment of apparatus 552, casing 556 may further comprise an inlet through which conditioned air may flow onto corona wires 554. In this embodiment, the intensity of the ion pool created at section 558 may be increased.

In order to achieve an ion beam which has at least one edge elongate electrostatic shield 560 typically comprising a grounded conductive material is placed with some spacing relative to charge pool apparatus 552. Electrostatic shield 560 may be configured as illustrated whereby charge pool apparatus 552 is partially obscured.

It is appreciated that apparatus 550 may serve as an elongate alternating polarity charge (EAPCS) source described hereinabove in accordance with the read and/or write techniques described hereinabove. It is further appreciated that this configuration is presented to offer an example of possible configurations for the EAPCS and is not intended to be limiting.

It will be appreciated by persons skilled in the art that the present invention is not limited to what has been particularly shown and described hereinabove. Rather the scope of the present invention is defined only by the claims which follow:

**Claims**

1. Apparatus for reading an electrostatic charge pattern (100) comprising:

   a dielectric substrate (102) having first (106) and second (104) opposite surfaces;
   a conductive backing (110) operatively associated with said first surface;
   an information bearing charge distribution ($p_1$-$p_N$) defining a pattern associated with said second surface ;
   means (108) for applying a flow of charges to said second surface thereby converting said information bearing charge pattern to a corresponding electrical signal in said conductive backing; and
   means (112-116) coupled to said conductive backing for sensing said electrical signal and providing an electrical output representing said pattern.

2. Apparatus according to claim 1,
   wherein the flow of charges which is applied to the second surface of the dielectric substrate contains charges of a single polarity.

3. Apparatus according to claim 1,
   wherein the flow of charges which is applied to the second surface of the dielectric substrate contains charges of both positive and negative polarities.

4. Apparatus according to claim 3,
   wherein the flow of charges alternates in time between positive and negative charges.

5. Apparatus according to claim 1,
   wherein application of said charges to the second surface is operative to generate at the first surface a voltage signal in accordance with the charge pattern on the second surface.

6. Apparatus according to claim 1,
   wherein said means coupled to said conductive backing comprises:

   capacitive means 112 for receiving said electrical signal; and
   means (116,114) coupled to said capacitive means for providing spatial pattern information corresponding to said electrical signal.

7. Apparatus according to claim 6,
   wherein said means for providing spatial pattern information comprises means (116, 114) for sensing the voltage on said capacitive means in a time domain which corresponds to a spatial domain in which the pattern is defined.

8. Apparatus according to claim 7,
   wherein said means for sensing the voltage comprises sample and hold means (114).

9. Apparatus as claimed in claim 1 wherein there is provided:

   means (552) for applying a flow of charges to said second surface of the dielectric substrate wherein the charges flow from a generally non-imagewise source and whereby as a result of application of such charges. the second surface retains a non-visible charge pattern corresponding to the desired pattern represented by the voltage signals; and

   means (554, 560) for thereafter employing the non-visible charge pattern to provide a visible image, wherein said means for providing a flow of charges includes an ion source assembly providing edge definition and comprising:

      an elongate ion source (554):
      an elongate electrostatic shield (560) disposed about said elongate ion source and defining an elongate opening parallel to said elongate ion source. said opening including an elongate edge, which limits the spatial extent of ion pathways extending through said opening.

10. A method for reading an electrostatic charge pattern including the steps of:

    providing a dielectric substrate having first and second opposite surfaces;
    operatively associating a conductive backing with said first surface;
    associating an information bearing charge distribution defining a pattern with said second surface;
    applying a flow of charges to said second surface thereby converting said information bearing charge pattern to a corresponding electrical signal in said conductive backing; and
    sensing said electrical signal and providing an electrical output representing said pattern.

11. A method according to claim 10,
    wherein the flow of charges which is applied to the second surface of the dielectric substrate contains charges of both positive and negative polarities.

12. A method according to claim 10, and
    wherein said step of sensing includes the steps of:

    capacitively accumulating said electrical signal;

    providing spatial pattern information corresponding to said electrical signal.

13. A method according to the method of claim 12, and including the step of sensing the voltage corresponding to said accumulated electrical signal in a time domain which corresponds to a spatial domain in which the pattern is defined.

14. A method according to claim 13,
    wherein the step of sensing the voltage includes the step of sensing the voltage using sample and hold means.

**Patentansprüche**

1. Vorrichtung zum Lesen eines elektrostatischen Ladungsmusters (100), wobei die Vorrichtung folgendes umfasst:

   ein dielektrisches Substrat (102) mit ersten (106) und zweiten (104) entgegengesetzten Oberflächen;
   einen leitfähigen Träger (110), der funktionsfähig mit der genannten ersten Oberfläche verbunden ist;
   eine Informationen tragende Ladungsverteilung ($P_1$ - $P_N$), die ein der genannten zweiten Oberfläche zugeordnetes Muster definiert;
   eine Einrichtung (108) zum Vorsehen eines Ladungsflusses an die genannte zweite Oberfläche, wodurch das genannte Informationen tragende Ladungsmuster in ein entsprechendes elektrisches Signal in dem genannten Träger konvertiert wird; und
   eine mit dem genannten leitfähigen Träger gekoppelte Einrichtung (112 - 116) zum Erfassen des genannten elektrischen Signals und zum Vorsehen einer elektrischen Ausgabe, die das genannte Muster darstellt.

2. Vorrichtung nach Anspruch 1, wobei der Ladungsfluss. der an die genannte zweite Oberfläche des dielektrischen Substrats vorgesehen wird, Ladungen mit einer einzigen Polarität aufweist.

3. vorrichtung nach Anspruch 1, wobei der Ladungsfluss, der an die genannte zweite Oberfläche des dielektrischen Substrats vorgesehen wird, Ladungen mit positiver und negativer Polarität aufweist.

4. Vorrichtung nach Anspruch 3, wobei der Ladungsfluss zeitlich zwischen positiven und negativen Ladungen wechselt.

5. Vorrichtung nach Anspruch 1, wobei das Vorsehen der genannten Ladungen an die zweite Oberfläche an der ersten Oberfläche funktionsmäßig ein Spannungssignal gemäß dem Ladungsmuster auf der zweiten Oberfläche erzeugt.

6. Vorrichtung nach Anspruch 1, wobei die mit dem genannten leitfähigen Träger gekoppelte genannte Einrichtung folgendes umfasst:

   eine kapazitive Einrichtung (112) zum Empfang des genannten elektrischen Signals; und eine Einrichtung (116, 114), die mit der genannten kapazitiven Einrichtung gekoppelt ist, um räumliche Musterinformationen vorzusehen, die dem genannten elektrischen Signal entsprechen.

7. Vorrichtung nach Anspruch 6, wobei die genannte Einrichtung zum Vorsehen räumlicher Musterinformationen eine Einrichtung (116, 114) zum Erfassen der Spannung an der genannten kapazitiven Einrichtung in einem Zeitbereich umfasst, der dem räumlichen Bereich entspricht, in dem das Muster definiert ist.

8. Vorrichtung nach Anspruch 7, wobei die genannte Einrichtung zum Erfassen der Spannung eine Abfrage- und Speichereinrichtung (114) umfasst.

9. Vorrichtung nach Anspruch 1, wobei folgendes vorgesehen ist:

   eine Einrichtung (552) zum Vorsehen eines Ladungsflusses an die genannte zweite Oberfläche des dielektrischen Substrats, wobei die Ladungen von einer allgemein nicht bildlichen Quelle fließen, und wobei die zweite Oberfläche als Folge des Vorsehens derartiger Ladungen ein nicht sichtbares Ladungsmuster speichert, das dem gewünschten Muster entspricht, das durch die Spannungssignale dargestellt wird; und eine Einrichtung (554, 560) zum folgenden Einsatz des nicht sichtbaren Ladungsmusters zum Vorsehen eines sichtbaren Bilds, wobei die genannte Einrichtung zum Vorsehen von Ladungsflüssen eine Ionenquellenanordnung aufweist, die eine Randschärfe vorsieht und folgendes umfasst:

   eine elongierte Ionenquelle (554); eine elongierte elektrostatische Abschirmung (560), die um die genannte elongierte Ionenquelle angeordnet ist und eine elongierte Öffnung parallel zu der genannten elongierten Ionenquelle definiert, wobei die genannte Öffnung einen elongierten Rand aufweist, der das räumliche Ausmaß der sich durch die genannte Öffnung erstreckenden Ionenpfade beschränkt.

10. Verfahren zum Lesen eines elektrostatischen Ladungsmusters, wobei das Verfahren die folgenden Schritte umfasst:

    Vorsehen eines dielektrischen Substrats mit ersten und zweiten entgegengesetzten Oberflächen; funktionsfähiges Zuordnen eines leitfähigen Trägers zu der genannten ersten Oberfläche; Zuordnen einer Informationen tragenden Ladungsverteilung, die ein Muster definiert, zu der genannten zweiten Oberfläche; vorsehen eines Ladungsflusses zu der genannten zweiten Oberfläche, wodurch das genannte Informationen tragende Ladungsmuster in ein entsprechendes elektrisches Signal in dem genannten leitfähigen Träger konvertiert wird; und Erfassen des genannten elektrischen Signals und vorsehen einer elektrischen Ausgabe, die das genannte Muster darstellt.

11. Verfahren nach Anspruch 10, wobei der Ladungsfluss, der an der zweiten Oberfläche des dielektrischen Substrats vorgesehen wird, Ladungen mit positiver und negativer Polarität aufweist.

12. Verfahren nach Anspruch 10, wobei der genannte Schritt des Erfassens ferner die folgenden Schritte umfasst:

    kapazitives Akkumulieren des genannten elektrischen Signals; Vorsehen räumlicher Musterinformationen, die dem genannten elektrischen Signal entsprechen.

13. Verfahren nach Anspruch 12, wobei das Verfahren ferner den Schritt des Erfassens der Spannung umfasst, die dem genannten akkumulierten elektrischen Signal in einem Zeitbereich entspricht, der einem räumlichen Bereich entspricht, in dem das Muster definiert ist.

14. Verfahren nach Anspruch 13, wobei der Schritt des Erfassens der Spannung den Schritt des Erfassens der Spannung unter Verwendung einer Abfrage- und Speichereinrichtung umfasst

## Revendications

1. Appareil pour la lecture d'une configuration de charge électrostatique (100) comprenant :

   un substrat diélectrique (102) ayant une première (106) et une deuxième (104) surfaces opposées ;

un support conducteur (110) fonctionnellement associé à la dite première surface ;

une distribution de charge porteuse d'information ($P_1$- $P_N$) définissant une configuration associée à la dite deuxième surface ;

des moyens (108) pour appliquer un flux de charges à la dite deuxième surface afin de convertir la dite configuration de charge porteuse d'information en un signal électrique correspondant dans le dit support conducteur ; et

des moyens (112-116) couplés au dit support conducteur pour détecter le dit signal électrique et fournir une sortie électrique représentant la dite configuration.

2. Appareil selon la revendication 1, dans lequel le flux de charges qui est appliqué à la deuxième surface du substrat diélectrique contient des charges d'une seule polarité.

3. Appareil selon la revendication 1, dans lequel le flux de charges qui est appliqué à la deuxième surface du substrat diélectrique contient des charges à la fois de polarité positive et de polarité négative.

4. Appareil selon la revendication 3, dans lequel le flux de charges alterne dans le temps entre des charges positives et des charges négatives.

5. Appareil selon la revendication 1, dans lequel l'application des dites charges à la deuxième surface agit pour engendrer, sur la première surface, un signal de tension en fonction de la configuration de charge sur la deuxième surface.

6. Appareil selon la revendication 1, dans lequel les dits moyens couplès au dit support conducteur comprennent:

des moyens capacitifs (112) pour recevoir le dit signal electrique ; et

des moyens (116, 114) couplés aux dits moyens capacitifs pour fournir une information de configuration spatiale correspondant au dit signal électrique.

7. Appareil selon la revendication 6, dans lequel les dits moyens pour fournir une Infonnation de configuration spatiale comprennent des moyens (115, 114) pour détecter la tension sur les dits moyens capacitifs dans un domaine de temps qui correspond à un domaine spatial dans lequel la configuration est définie.

8. Appareil selon la revendication 7, dans lequel les dits moyens de détection de la tension comprennent des moyens d'échantillonnage et de maintien (114).

9. Appareil selon la revendication 1, dans lequel il est prévu :

des moyens (552) pour appliquer un flux de charges à la dite deuxième surface du substrat diélectrique de sorte que les charges circulent à partir d'une source sensiblement non en forme d'image et par suite, comme résultat de l'application de ces charges, la deuxième surface retient une configuration de charge non visible correspondant à la configuration désirée représentée par les signaux de tension ; et

des moyens (554, 560) pour employer ensuite la configuration de charge non visible afin de fournir une image visible ;

dans lequel les dits moyens pour fournir un flux de charges comprennent un dispositif de source d'ions procurant une définition de bord et comportant :

une source d'ions allongée (554);

un écran électrostatique allongé (560) disposé autour de la dite source d'ions allongée et définissant une ouverture allongée parallèle à la dite source d'ions allongée, la dite ouverture incluant un bord allongé, qui limite l'étendue spatiale des trajectoires des Ions traversant la dite ouverture.

10. Procédé pour la lecture d'une configuration de charge électrostatique incluant les étapes de :

préparation d'un substrat diélectrique ayant une première et une deuxième surfaces opposées ;

association fonctionnelle d'un support conducteur à la dite première surface ;

association d'une distribution de charge porteuse d'information, définissant une configuration avec la dite deuxième surface ;

application d'un flux de charges à la dite deuxième surface afin de convertir la dite configuration de charge porteuse d'information en un signal électrique correspondant dans te dit support conducteur ; et

détection du dit signal électrique et fourniture d'une sortie électrique représentant la dite configuration.

11. Procédé selon la revendication 10, dans lequel le flux de charges qui est appliqué à la deuxième surface du substrat diélectrique contient des charges à la fois de polarité positive et de polarité négative.

12. Procédé selon la revendication 10, dans lequel la dite étape de détection comprend les étapes de :

accumulation capacitive du dit signal électrique ;
fourniture d'une information de configuration spatiale correspondant au dit signal électrique.

13. Procédé selon la revendication 12 et incluant l'étape de détection de la tension correspondant au dit signal électrique accumulé dans un domaine de temps qui correspond à un domaine spatial dans lequel la configuration est définie.

14. Procédé selon la revendication 13, dans lequel l'étape de détection de la tension comprend l'étape de détection de la tension par utilisation de moyens d'échantillonnage et de maintien.

FIG.1A

FIG.1B

FIG.2A

FIG.2B

FIG.2C

FIG. 3 A

FIG. 3 B

FIG. 3 C

TIME EXPANDED

FIG. 3 D

FIG. 4 A

FIG. 4 B

FIG. 5

FIG. 6 A

FIG. 6 B

FIG. 6 C

FIG. 7A

FIG. 7B

EP 0 769 732 B1

TO HOST
COMPUTER

172

"READ"
ELECTRONICS

173

B

B

ROW m

FIG. 8 A

COL n

179

COL n

ROW m

ACCUMU
LATOR

"READ"
ELECTRONICS

173

178

170

176

174

FIG. 8 B

FIG. 9 B

FIG. 9 A

TO HOST
COMPUTER

$V_{set}$

ACC. ACC. · · · · · · · · · ACC.

MULTIPLEXER

"READ"
ELECTRONICS

TO HOST
COMPUTER

FIG. 9 C

FIG.10A

FIG.10B